# EUROPEAN PATENT APPLICATION

(11) **EP 4 618 264 A1**
(43) Date of publication of application: **17.09.2025**
(21) Application number: 24767314.8
(22) Date of filing: 22.02.2024
(51) Int. Cl.: H01M 50/105, H01M 10/04, H01M 50/204, H01M 50/183

(54) **PRESSURE MEMBER AND POUCH CELL COMPRISING SAME**

(30) Priority: 06.03.2023 KR 20230029522
(71) Applicant: LG Energy Solution, Ltd., Seoul 07335 (KR)
(72) Inventor: KIM, Sang Hun, Daejeon 34122 (KR); PARK, Eun Suk, Daejeon 34122 (KR); LEE, Yu Jin, Daejeon 34122 (KR); YU, Hyung Kyun, Daejeon 34122 (KR)
(74) Representative: Plasseraud IP
(86) International application number: PCT/KR2024/002305
(87) International publication number: WO 2024/186025

(57) **Abstract**

A pouch cell includes: an electrode lead electrically connected to an electrode assembly accommodated in a pouch to protrude outwardly from the pouch; a lead film that covers a portion of the electrode lead to insulate the electrode lead from the pouch, and includes a passage that forms a gas flow path when a pressure inside the pouch increases to a set pressure or higher; and a pressing member that is disposed outside the pouch, and presses the passage to close the gas flow path of the passage.

## Description

### TECHNICAL FIELD

This application is based on and claims priority from Korean Patent Application No. 10-2023-0029522, filed on March 6, 2023 with the Korean Intellectual Property Office, the disclosure of which is incorporated herein in its entirety by reference.

The present disclosure relates to a chargeable and dischargeable pouch cell.

### BACKGROUND

Recently, the price of energy resources has risen due to the depletion of fossil fuels, and the environmental pollution has been the issue of immense concerns. Under the circumstances, environmentally-friendly alternative energy sources have become indispensable factors for future lives. Thus, researches are ongoing on technologies of producing various powers such as solar, wind, and tidal powers, and considerable interests are continuing in power storage systems such as batteries for more efficiently using produced electric energy.

Further, the demand for batteries has increased rapidly with the technical development and the rising demand for electronic mobile devices and electric automobiles that use batteries. In response, more studies are being conducted on batteries that can meet various needs.

Batteries that store electric energy may generally be classified into primary batteries and secondary batteries. While primary batteries are disposable one-time use batteries, secondary batteries are typically multi-use rechargeable batteries manufactured using a material undergoing repeated oxidation and reduction by current. For example, when a reduction reaction occurs in the battery material from current passing therethrough, the battery is charged, and when an oxidation reaction occurs in the material, the battery is discharged. The repeated charging and discharging generate electricity.

According to the shapes, the secondary batteries may be classified into, for example, cylindrical cells, pouch cells, and prismatic cells. Among the cells, a pouch cell may include an electrode assembly formed by stacking a positive electrode, a negative electrode, and a separator, all of which are housed in a pouch.

### DISCLOSURE

### TECHNICAL PROBLEM

The present disclosure provides a pouch cell capable of preventing or reducing the penetration of moisture or the like, from outside a pouch into the pouch through a passage for discharging a gas inside the pouch to the outside of the pouch.

### TECHNICAL SOLUTION

According to an embodiment of the present disclosure, a pouch cell may include: an electrode lead electrically connected to an electrode assembly accommodated in a pouch to protrude outwardly from the pouch; a lead film that covers a portion of the electrode lead to insulate the electrode lead from the pouch, and includes a passage that forms a gas flow path when a pressure inside the pouch increases to a set pressure or higher; and a pressing member that is disposed outside the pouch, and presses the passage to close the gas flow path of the passage.

The pressing member may include a first presser disposed on an outer surface of the pouch positioned on one side relative to the electrode lead to press the passage in a direction toward the electrode lead, and a second presser disposed on an outer surface of the pouch positioned on an opposite side relative to the electrode lead to press the passage in a direction toward the electrode lead.

The pressing member may further include a connector that is connected to each of the first presser and the second presser, and provides the first presser and the second presser with a force to press the passage.

The connector may connect to each of one end of the first presser and one end of the second presser.

The connector may include a first connector connected to each of one end of the first presser and one end of the second presser, and a second connector connected to each of an opposite end of the first presser and an opposite end of the second presser.

The connector may include an elastic portion that provides an elastic resilience enabling the first presser and the second presser to press the passage, a first extension that connects the first presser and the elastic portion, and a second extension that connects the second presser and the elastic portion.

The elastic portion may have a curved shape to generate the elastic resilience when the elastic portion is deformed, and the first extension may approach the second extension as a distance from the elastic portion increases.

The elastic portion may have a spring-like wound shape to generate the elastic resilience when the elastic portion is deformed.

Each of the first presser and the second presser may include a protector that is deformable to absorb impacts and disposed in contact with the pouch, and a fixer that is disposed opposite to the pouch relative to the protector and fixes the protector.

The protector may be formed of a rubber to be deformable, and disposed at a position corresponding to a position of the passage.

According to another embodiment of the present disclosure, a pressing member may be disposed outside a pouch of a pouch cell and press a passage formed when a pressure in the pouch increases to a set pressure or higher, such that a gas flow path of the passage is closed when the pressure in the pouch decreases to a set pressure or lower. The pressing member may include: a first presser that is disposed in contact with the pouch, and presses the passage; a second presser that is disposed on an opposite side to the first presser relative to the pouch to be in contact with the pouch, and presses the passage; and a connector that is connected to each of the first presser and the second presser, and provides the first presser and the second presser with a force to press the passage.

According to yet another embodiment of the present disclosure, a battery module may include: a cell stack including a plurality of pouch cells; and a frame that accommodates the cell stack. Each of the pouch cells may include an electrode lead electrically connected to an electrode assembly accommodated in a pouch to protrude outwardly from the pouch, a lead film that covers a portion of the electrode lead to insulate the electrode lead from the pouch, and includes a passage that forms a gas flow path when a pressure inside the pouch increases to a set pressure or higher, and a pressing member that is disposed outside the pouch, and presses the passage to close the gas flow path of the passage.

The frame may include a fixing rod disposed at one longitudinal end of the cell stack, and extending in a stacking direction of the pouch cells, and the pressing member may be connected and fixed to the fixing rod.

The battery module may further include: a busbar assembly that is disposed at one longitudinal end of the cell stack to block an opening of the frame, and electrically connects the pouch cells to each other, and the pressing member may be connected and fixed to the busbar assembly.

According to yet another embodiment of the present disclosure, a pouch cell for a lithium secondary battery may include: an electrode lead electrically connected to an electrode assembly accommodated in a pouch to protrude outwardly from the pouch; a lead film configured to cover a portion of the electrode lead to insulate the electrode lead from the pouch, and including a passage that forms a gas flow path when a pressure inside the pouch increases to a set pressure or higher; and a pressing member disposed outside the pouch, and configured to press the passage to close the gas flow path of the passage.

The pressing member may be designed to close the gas flow path of the passage when the pressure inside the pouch decreases to a set pressure or lower.

### ADVATAGEOUS EFFECT

A pouch cell according to the present disclosure includes, for example: an electrode lead electrically connected to an electrode assembly accommodated in a pouch to protrude outwardly from the pouch; a lead film that covers a portion of the electrode lead to insulate the electrode lead from the pouch, and includes a passage that forms a gas flow path when a pressure inside the pouch increases to a set pressure or higher; and a pressing member that is disposed outside the pouch, and presses the passage to close the gas flow path of the passage.

Thus, it is possible to prevent moisture or the like from penetrating into the pouch through the passage after a gas inside the pouch is sufficiently discharged to the outside of the pouch.

As a result, the degradation in function of the pouch cell may be avoided.

At the same time, the pressing member is disposed without interfering with the electrode lead, which may not affect the stability of the pouch cell.

Further, since the pressing member is disposed outside the pouch, the pressing member may be applied to various existing pouch cells, which may improve the utilization of the pressing member.

The effects of the present disclosure are not limited by those described above, and more various effects are included herein below.

### BRIEF DESCRIPTION OF THE DRAWINGS

FIG. 1 is a perspective view schematically illustrating a pouch cell according to an embodiment of the present disclosure.
FIG. 2 is a plan view schematically illustrating a pouch cell according to an embodiment of the present disclosure.
FIG. 3 is a portion of a cross-sectional view schematically illustrating a cross section taken along a line A-A' of FIG. 2.
FIG. 4 is a cross-sectional view schematically illustrating a cross section taken along a B-B' of FIG. 2.
FIG. 5 is a perspective view schematically illustrating a pressing member of a pouch cell according to an embodiment of the present disclosure.
FIG. 6 is a perspective view schematically illustrating a pressing member of a pouch cell according to another embodiment of the present disclosure.
FIG. 7 is an exploded perspective view schematically illustrating a battery module according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

Hereinafter, with reference to the accompanying drawings, embodiments of the present disclosure will be described in detail to facilitate the practicing by one of ordinary skill in the art to which the present disclosure belongs. The present disclosure may be implemented in various different forms, and is not limited or restricted by the embodiments described herein below.

In order to clearly describe the present disclosure, descriptions of parts unrelated to the description of the present disclosure or detailed descriptions of related well-known art that may not be germane to the understanding of the present disclosure will be omitted. When assigning reference numerals for components in each drawing, the same or similar components throughout the descriptions herein will be denoted with the same or similar reference numerals.

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

When a pouch cell, which is used as a pouch-type lithium secondary cell, is repeatedly charged and discharged, a gas may be generated inside the pouch due to various chemical reactions. At this time, when the gas generated in the pouch is not discharged efficiently, the pouch cell may suffer from, for example, a venting phenomenon that the pouch opens due to the increasing pressure inside the pouch. Thus, the pouch cell needs to have a configuration to discharge the pressure inside the pouch to the outside.

Meanwhile, when the pouch cell includes the configuration to discharge a gas, moisture outside the pouch may penetrate into the pouch through the portion where the gas is discharged to the outside of the pouch. The penetration of moisture may cause additional problems including the degradation in performance of the pouch cell.

Accordingly, there is a need for a pouch cell capable of preventing or decreasing the penetration of moisture outside the pouch into the pouch through the portion where the gas in the pouch is discharged to the outside.

### Pouch Cell

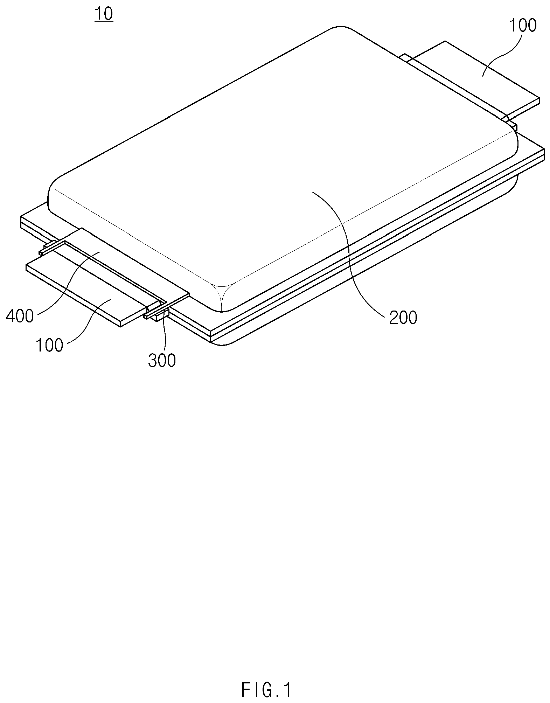

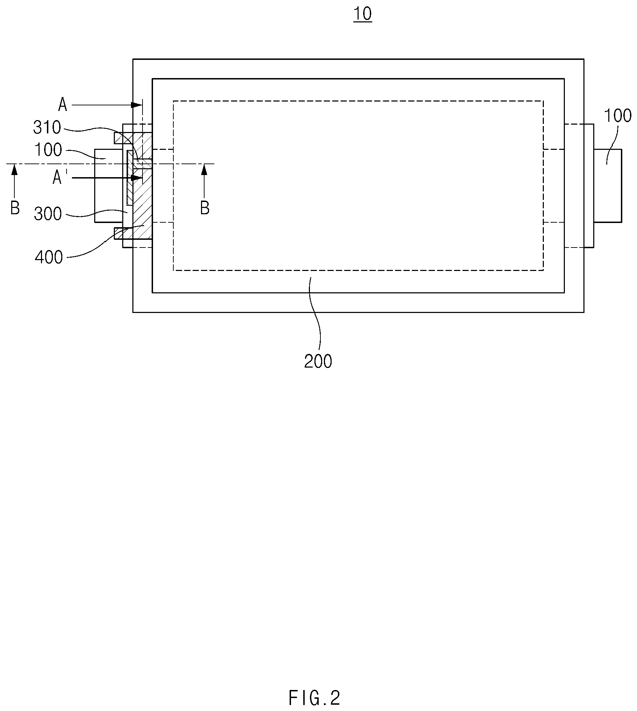

FIG. 1 is a perspective view schematically illustrating a pouch cell 10 according to an embodiment of the present disclosure, and FIG. 2 is a plan view schematically illustrating the pouch cell 10 according to an embodiment of the present disclosure.

Referring to FIG. 1, the pouch cell 10 according to an embodiment of the present disclosure may include an electrode lead 100, a pouch 200, and a lead film 300. For example, the pouch 200 of the pouch cell 10 may accommodate an electrode assembly therein, and the electrode lead 100 may be electrically connected to the electrode assembly accommodated in the pouch 200 to protrude outwardly from the pouch 200. Further, the lead film 300 may cover a portion of the electrode lead 100 to insulate the electrode lead 100 from the pouch 200.

The pouch 200 of the pouch cell 10 may be configured with a pair of pouches facing each other to accommodate the electrode assembly in the space between the pair of pouches, and the pair of pouches 200 accommodating the electrode assembly may be joined together through a sealing process. For example, the sealing process may refer to a process of sealing the facing pouches 200 together using, for example, heat or a pressure. The electrode assembly may refer to a structure in which the positive electrode, the negative electrode, and the separator are stacked or wrapped around each other.

Meanwhile, the pouch 200 may include a resin layer and a metal layer, and the material for the metal layer may be, for example, aluminum (Al). When the resin layers of the pair of pouches 200 are melted by heat during the sealing process described above, the pouches 200 may be adhered to each other.

The electrode lead 100 of the pouch cell 10 may be configured with a conductor, and disposed to extend from the inside to the outside of the pouch 200. Further, the electrode lead 100 may include a negative electrode lead and a positive electrode lead. The negative electrode lead and the positive electrode lead may be disposed on one side of the pouch 200 or both sides of the pouch 200, respectively. As illustrated in FIG. 1, in the pouch cell 10 according to an embodiment of the present disclosure, the electrode lead 100 for the negative electrode and the electrode lead 100 for the positive electrode may be disposed on both sides of the pouch 200, respectively.

The lead film 300 of the pouch cell 10 may be formed of an insulating material, and disposed between the electrode lead 100 and the pouch 200, to insulate the electrode lead 100 and the pouch 200 from each other. Specifically, the lead film 300 may be disposed to cover a portion of the electrode lead 100. In this case, the portion of the electrode lead 100 that is covered by the leaf film 300 may include the portion where the electrode lead 100 and the pouch 200 overlap with each other, and the insulation between the electrode lead 100 and the pouch 200 may be maintained by the lead film 300 including the insulating material.

Meanwhile, as the pouch cell 100 is repeatedly charged and discharged, a gas may be generated and accumulated (build-up) inside the pouch 200 due to various chemical reactions. The gas accumulating in the pouch 200 may cause the swelling phenomenon that the pouch 200 expands (swells), with expansion possibly causing the pouch 200 to explode. As a measure to counteract a potential explosion, the pouch 200 may include a gas discharge passage or pathway, from which the gas in the pouch 200 is discharged to the outside of the pouch 200 when the gas pressure in the pouch 200 reaches a predetermined pressure. According to an embodiment of the present disclosure, the lead film 300 of the pouch cell 10 may include a passage 310 on one side thereof as an example of the configuration to discharge the gas to the outside.

The passage 310 of the lead film 300 may form a gas flow path when the pressure in the pouch 200 rises to a set pressure or higher, while not forming the gas flow path under normal circumstances. For example, the passage 310 of the lead film 300 may have a weaker adhesion to the electrode lead 100 than the adhesion of the other portions of the lead film 300 to the electrode lead 100. Accordingly, when the gas pressure in the pouch 200 rises to, for example, the set pressure or higher, the adhesion between the electrode lead 100 and the passage 310 is released by the internal pressure, so that the gas flow path may be formed in the passage 310.

The gas inside the pouch 200 may move through the gas flow path of the passage 310, and the internal gas moved into the passage 310 may be discharged to the outside of the pouch 200 by penetrating the lead film 300. At this time, the gas moves in the unit of molecules, and may penetrate the lead film 300 in the manner of diffusion. That is, the lead film 300 may be formed of a material having a high gas penetration performance to facilitate the discharge by diffusion of the internal gas. For example, the lead film 300 may be formed of at least one substance among polyolefin-based substances, fluorine-based substances, and porous ceramic-based substances. For example, the lead film 300 may be formed of at least one substance among the polyolefin-based substances, the fluorine-based substances, and the porous ceramic-based substances that satisfy a gas penetration performance value for discharging the gas. The polyolefin-based substances may include one or more substances selected from the group including polypropylene, polyethylene, and polyvinyldifluoride (PVDF). The fluorine-based substances may include one or more substances selected from the group consisting of polytetrafluoroethylene and polyvinylidenefluoride.

The gas occurring inside the pouch 200 may move through the gas flow path of the passage 310, and then, be discharged to the outside of the pouch 200 by penetrating the lead film 300. Accordingly, it is possible to delay or prevent the venting phenomenon that the gas increases the pressure in the pouch 200, consequently opening the pouch 200.

In an embodiment of the present disclosure, an additional configuration may be provided between the electrode lead 100 and the lead film 300 in order to enable the passage 310 to efficiently form the gas flow path. In this case, the adhesion between the passage 310 and the additional configuration may be relatively weaker, and when the pressure in the pouch 200 rises to the set pressure or higher, the space between the passage 310 and the additional configuration expands, forming the gas flow path in the passage 310.

Referring to FIG. 2, the passage 310 may be formed to extend from the portion where the electrode lead 100 and the pouch 200 overlap with each other to the portion where the electrode lead 100 and the pouch 200 do not overlap with each other. Hereinafter, for the convenience of description, the portion of the passage 310 that corresponds to the portion where the electrode lead 100 and the pouch 200 overlap with each other will be referred to as an inner passage, and the portion of the passage 310 that corresponds to the portion where the electrode lead 100 and the pouch 200 do not overlap with each other will be referred to as an outer passage.

In this case, the width of the inner passage and the width of the outer passage may be different. Here, the width may refer to the length in the width direction of the electrode lead 100. In the passage 310 according to an embodiment of the present disclosure, the width of the outer passage may be wider than the width of the inner passage. This configuration is merely an example, and the shape of the passage 310 may vary. For example, the width of the outer passage may be narrower than the width of the inner passage, or the inner and outer passages may have substantially the same width.

The passage 310 may be formed at each of both sides of the electrode lead 100 or at one side of the electrode lead 100. In an embodiment of the present disclosure, the passage 310 is formed at one side of the electrode lead 100.

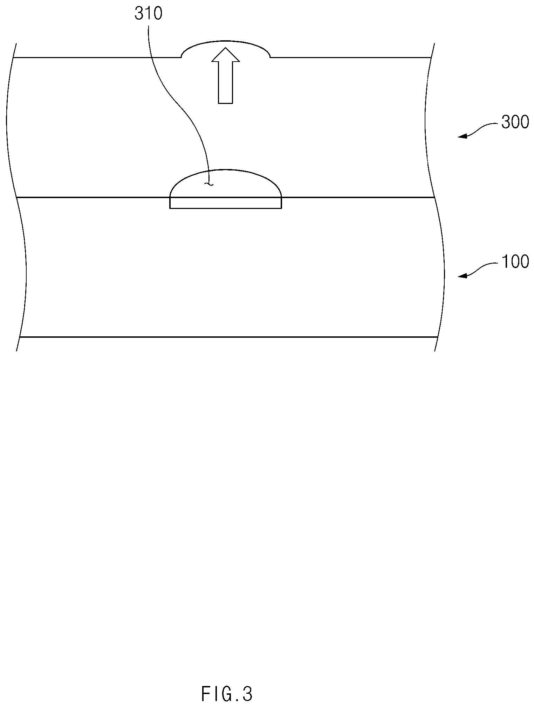

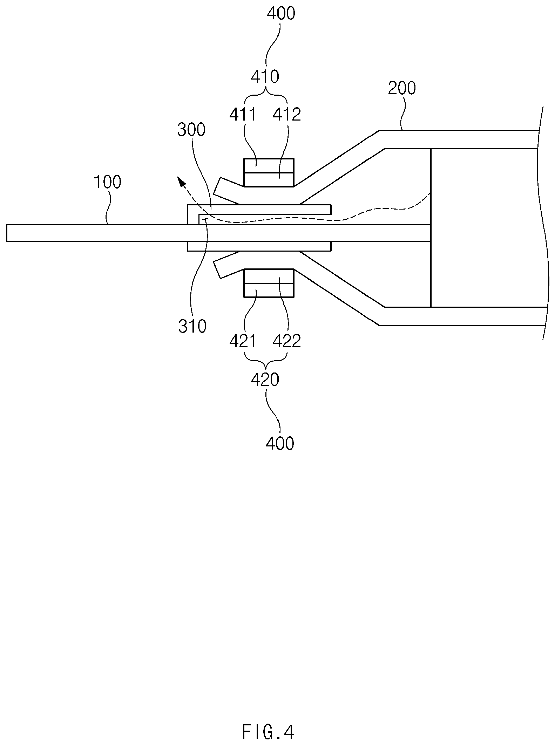

FIG. 3 is a portion of a cross-sectional view schematically illustrating the cross section taken along a line A-A' of FIG. 2 in a state where the gas flow path is formed in the passage 310, and FIG. 4 is a cross-sectional view schematically illustrating the cross section taken along a line B-B' of FIG. 2 in the same state.

FIG. 3 represents a case where the gas flow path is formed in the passage 310 due to the gas inside the pouch 200, and in this case, the passage 310 may be a path through which the gas moves. At this time, for example, moisture or the like outside the pouch 200 of the pouch cell 10 may penetrate into the pouch 200 through the passage 310 in which the gas flow path is formed, after the gas in the pouch 200 has moved to the outside of the pouch 200 through the gas flow path of the passage 310. The penetrating moisture or the like may cause the degradation of the performance of the pouch cell 10. Thus, as an example of a configuration to prevent the penetration of moisture or the like outside the pouch 200 into the pouch 200, the pouch cell 10 according to an embodiment of the present disclosure may include a pressing member 400 capable of pressing a portion of or the entire passage 310 to close the passage 310 when the pressure in the pouch 200 drops to a certain pressure or lower.

The pressing member 400 of the pouch cell 10 may be disposed outside the pouch 200 to apply a pressure or force to the passage 310 such that the gas flow path of the passage 310 in the opened state after the discharge of the internal gas is closed off when the pressure in the pouch 200 drops to the certain pressure or lower. That is, after the internal gas is discharged, *i.e.,* when the pressure in the pouch 200 drops to the set pressure or lower, the pressing member 400 may apply a pressure or force to the passage 310 to close the gas flow path of the passage 310 again.

Referring to FIG. 4, the pressing member 400 may be disposed at the position corresponding to the portion where the pouch 200 and the lead film 300 are in contact with each other, on the outer surface of the pouch 200. That is, the pressing member 400 may press a portion of the passage 310 where the gas flow path is formed (see, *e.g.*, FIG. 2). The pressing member 400 may be designed to prevent the penetration of outside moisture or the like into the pouch 200 even when only a portion of the passage 310 is closed, or may be designed to prevent the penetration only when the entire passage 310 is closed.

Since the pressing member 400 according to an embodiment of the present disclosure is disposed outside the pouch 200, it does not interfere with the electrode lead 100. Thus, the stability of the pouch cell 10 may not be affected. Further, since the pressing member 400 is a separate member disposed outside the pouch 200, it may be applied to various shapes of pouch cells. Therefore, the utilization of the pressing member 400 may be improved.

### Pressing Member

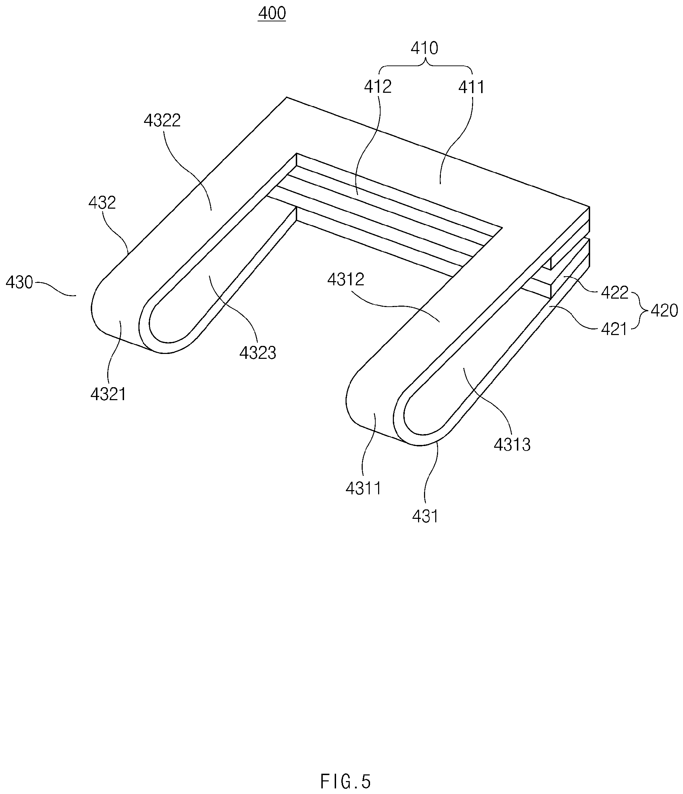

FIG. 5 is a perspective view schematically illustrating the pressing member 400 of the pouch cell 10 according to an embodiment of the present disclosure.

Hereinafter, the shape of the pressing member 400 according to an embodiment of the present disclosure will be described in detail.

As an example of a configuration to efficiently apply a force to the passage 310, the pressing member 400 of the pouch cell 10 according to an embodiment of the present disclosure may include a first member 410 and a second member 420. Referring to FIGS. 4 and 5, the first member 410 of the pressing member 400 may be disposed on the outer surface of the pouch 200 positioned on one side relative to the electrode lead 100 to press the passage 310 in the direction from the outer surface of the pouch 200 toward the electrode lead 100, and the second member 420 may be disposed on the outer surface of the pouch 200 positioned on the opposite side relative to the electrode lead 100 to press the passage 310 in the direction from the outer surface of the pouch 200 toward the electrode lead 100. Thus, the pressing member 400 may press the passage 310 from both sides by the first member 410 and the second member 420.

The pressing member 400 may further include connection members 430 to connect the first member 410 and the second member 420 to each other. The connection members 430 may be connected to each of the first member 410 and the second member 420. Specifically, the connection members 430 may include a first connection unit 431 connected to each of one end of the first member 410 and one end of the second member 420, and a second connection unit 432 connected to each of the other end of the first member 410 and the other end of the second member 420. That is, the first connection unit 431 and the second connection unit 432 may be connected to the one-side ends of the first member 410 and the second member 420 and the other-side ends of the first member 410 and the second member 420, respectively. Here, one end and the other end of the first member 410 may refer to both ends thereof in the longitudinal direction of the first member 410. Similarly, one end and the other end of the second member 420 may refer to both ends thereof in the longitudinal direction of the second member 420.

Meanwhile, the connection members 430 may provide the force for pressing the passage 310, to the first member 410 and the second member 420. Specifically, the connection members 430 may include elastic portions 4311 and 4321 that provide an elastic resilience to cause the first member 410 and the second member 420 to press the passage 310. The elastic portions 4311 and 4321 are such that the resilience of the material results in an inwardly biasing force, which is the force causing the first member 410 and the second member 420 to press the passage 310. The elastic portions 4311 and 4321 are shown as one shape, but are not limited to this shape, and may also have various shapes as long as it may provide the elastic resilience (e.g., inward biasing) to the first member 410 and the second member 420.

As an example of the shape for providing the force to the first member 410 and the second member 420, the elastic portions 4311 and 4321 according to an embodiment of the present disclosure may have a curved shape. For example, the elastic portions 4311 and 4321 may have a curved shape that may generate the elastic resilience (e.g., inward biasing) when the elastic portions 4311 and 4321 are deformed. Since the elastic portions 4311 and 4321 have the curved shape, they may easily be installed outside the pouch 200 and may relatively less interfere with the pouch 200.

Meanwhile, when the elastic resilience provided by the elastic portions 4311 and 4321 is excessively strong, the gas flow path of the passage 310 may not be formed by the gas in the pouch 200. Accordingly, the elastic portions 4311 and 4321 may be configured to have an adequate elastic resilience, and for example, may be formed not to have an excessively strong elastic resilience in consideration of the magnitude of the pressure of the internal gas. At the same time, the elastic portions 4311 and 4321 need to provide a force to the extent that the gas flow path of the passage 310 may be cut off after the gas in the pouch 200 is sufficiently discharged. To this end, the force of the elastic portions 4311 and 4321 may be adjusted using, for example, the material and the shape of the elastic portions 4311 and 4321.

The connection members 430 may include first extension portions 4312 and 4322 that connect the elastic portions 4311 and 4321 to the first member 410, and second extension portions 4313 and 4323 that connect the elastic portions 4311 and 4321 to the second member 420. Referring to FIG. 5, the first extension portions 4312 and 4322 may be arranged to approach the second extension portions 4313 and 4323 as the distance from the elastic portions 4311 and 4321 increases, in order to cause the first member 410 and the second member 420 to efficiently press the passage 310 by the elastic resilience provided from the elastic portions 4311 and 4321. When the first extension portions 4312 and 4322 and the second extension portions 4313 and 4323 are arranged to approach each other as being away from the elastic portions 4311 and 4321, the pressing member 400 may be applied to pouch cells 10 having various thicknesses.

The first member 410 and the second member 420 of the pressing member 400 according to an embodiment of the present disclosure may include protection members 412 and 422, respectively, as an example of a configuration to prevent the damage to the pouch 200. Further, the first member 410 and the second member 420 may include fixing members 411 and 421, respectively, to fix the protection members 412 and 422.

According to an embodiment, the protection members 412 and 422 of the first member 410 and the second member 420 may be deformable to absorb impacts, and may be disposed in contact with the pouch 200. The fixing members 411 and 421 of the first member 410 and the second member 420 may be disposed on the surfaces of the protection members 412 and 422, respectively, opposite to the pouch 200, to fix the protection members 412 and 422. Thus, each of the first member 410 and the second member 420 may be configured with two layers.

As an example of the configuration to absorb impacts, the protection members 412 and 422 may be formed of a rubber material to be deformable. This material may be merely an example, and the protection members 412 and 422 may be formed of other materials that may absorb impacts.

The pressing member 400 may prevent damage to the exterior of the pouch 200 using the protection members 412 and 422.

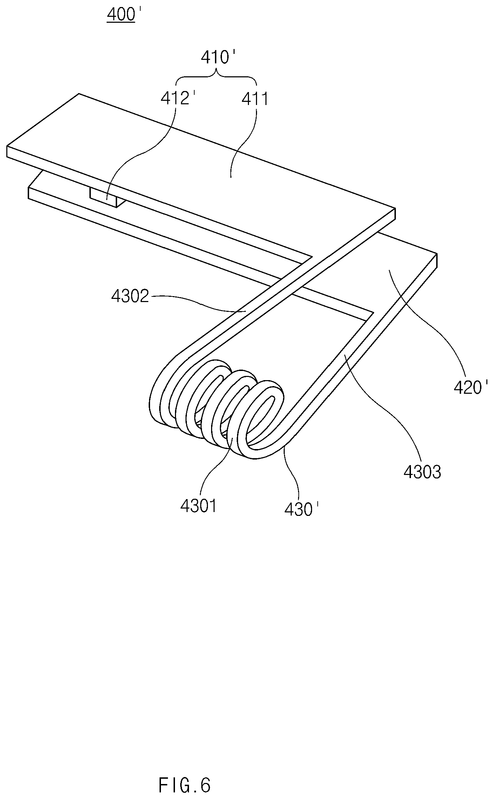

FIG. 6 is a perspective view schematically illustrating a pressing member 400' of a pouch cell according to another embodiment of the present disclosure. The pressing member 400' is similar to the pressing member 400 according to an embodiment of the present disclosure as described above, and the similar structures of the pressing member 400' maintain the same element numbers and descriptions as those in the pressing member 400.

Thus, hereinafter, detailed descriptions of the similar structures to the pressing member 400 will be omitted.

In order to limit the possibility of interference between the pressing member 400' and the pouch 200, a connection member 430' of the pressing member 400' according to another embodiment of the present disclosure may be connected to only the one-side ends of a first member 410' and a second member 420'. That is, the connection member 430' may be connected to each of one end of the first member 410' and one end of the second member 420'.

Since the pressing member 400' according to another embodiment of the present disclosure is connected to only the one-side ends of the first member 410' and the second member 420', the space occupied by the connection member 430' may be relatively reduced. Further, the possibility of interference between the connection member 430' and the electrode lead 100 or the pouch 200 may be limited.

As an example of the shape to provide a force to the first member 410' and the second member 420', an elastic portion 4301 according to another embodiment of the present disclosure may have a coiled shape like a spring. Specifically, the elastic portion 4301 may have a repeatedly coiled shape to generate the elastic resilience (e.g., from the biasing force of the coil) when the elastic portion 4301 is deformed. Further, a first extension portion 4302 may be disposed to approach a second extension portion 4303 as the distance from the elastic portion 4301 increases, in order to cause the first member 410' and the second member 420' to efficiently perform the pressing by the elastic resilience provided from the elastic portion 4301.

As an example of the configuration to prevent the damage to the pouch 200, the first member 410' of the pressing member 400' according to another embodiment of the present disclosure may include a protection member 412'. In this case, the second member 420' may lack a protection member. For example, alternately, the passage 310 according to another embodiment of the present disclosure may be formed at only the one side of the electrode lead 100 on which the first member 410' is disposed. Thus, only the first member 410' may include the protection member 412' since the first member 410' is disposed on the portion that is relatively highly likely to be damaged due to the formation of the passage 310.

The protection member 412' of the first member 410', according to another embodiment of the present disclosure, may have the smaller cross-sectional area than the cross-sectional area of the fixing member 411. For example, the protection member 412' of the first member 410' may be disposed only at the position corresponding to the position of the passage 310. More specifically, the protection member 412' may be disposed only at the position corresponding to the position of the inner passage described in an embodiment of the present disclosure above. As described above, the position corresponding to the position of the passage 310 may be the portion of the pouch 200 that is highly likely to be damaged due to the formation of the passage 310. Thus, the protection member 412' of the first member 410' may be disposed only at the position corresponding to the position of the passage 310. When the lead film 300 includes a plurality of passages 310 spaced apart from each other, the protection member 412' may also be disposed at a plurality of positions.

In the pressing member 400' according to another embodiment of the present disclosure, only the first member 410' includes the protection member 412' disposed at the position corresponding to the position of the passage 310, so that the manufacturing economics may be improved.

### Battery Module

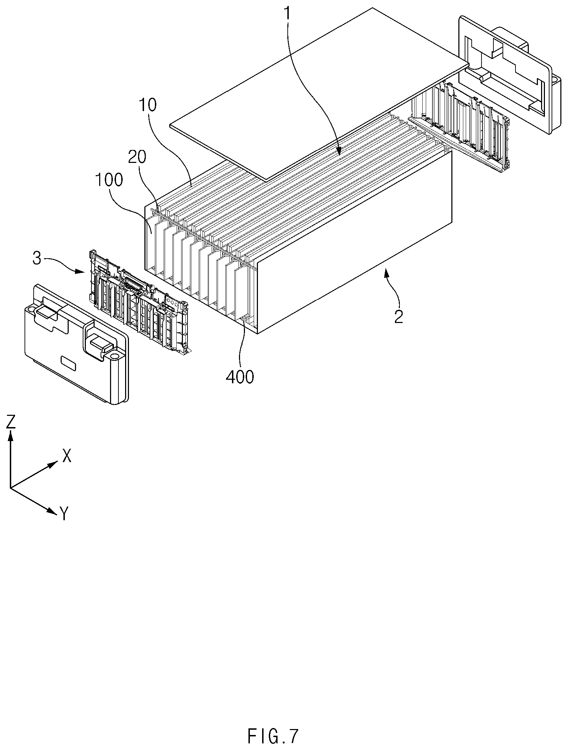

FIG. 7 is an exploded perspective view schematically illustrating a battery module according to an embodiment of the present disclosure. Similar components to those of the pouch cell 10 of FIG. 1 have the same element numbers and descriptions as those of the pouch cell 10 detailed above.

Hereinafter, detailed descriptions of the same configuration as that of the pouch cell 10 according to an embodiment of the present disclosure above will be omitted.

In a case where much more electric energy is needed as in automobiles, the electric energy provided by a single pouch cell may be insufficient. In this case, a battery module including a plurality of pouch cells may be used to provide a larger amount of electric energy. In order to provide a further larger amount of electric energy, a battery pack including a plurality of battery modules may be used.

Referring to FIG. 7, a battery module according to an embodiment of the present disclosure may include a cell stack 1 and a frame 2. The cell stack 1 may include a plurality of pouch cells 10, and may be accommodated in the frame 2.

For example, the cell stack 1 may be formed by stacking the plurality of pouch cells 10 side by side. The frame 2 may be configured with a bottom plate and lateral plates connected to both sides of the bottom plate, to have a U-shaped cross section. The shape of the frame 2 in the present embodiment is merely an example, and the frame 2 may have other shapes.

Each pouch cell 10 of the cell stack 1 may include an electrode lead 100, a pouch 200, a lead film 300, and a pressing member 400, and the pressing member 400 may be disposed outside the pouch 200.

Meanwhile, a configuration may be provided to fix the pressing member 400 for the stability of the pressing member 400 in a state where the cell stack 1 is accommodated in the frame 2. As an example of the configuration to fix the pressing member 400, the frame 2 of the battery module according to an embodiment of the present disclosure may include a fixing rod 20.

The fixing rod 20 is disposed at one end of the cell stack 1 in the longitudinal direction of the cell stack 1, and may have a shape that extends in the stacking direction of the pouch cells 10. Both longitudinal ends of the fixing rod 20 may be connected to the lateral plates of the frame 2, respectively.

As described above, the pressing member 400 may include the first member 410, the second member 420, and the connection members 430 connecting the first member 410 and the second member 420. Referring to FIG. 7, in a state where the plurality of pouch cells 10 are arranged in the frame 2, the connection members 430 of the pressing member 400 may be disposed on both sides of the electrode lead 100. At this time, the connection member 430 positioned on one side of the electrode lead 100 may be connected to the fixing rod 20. Here, various methods may be used to connect the fixing rod 20 and the connection member 430, such as forming a structure in which the connection member 430 is inserted into the fixing rod 20.

When the pressing member 400 is connected to the fixing rod 20, the pressing member 400 is fixed to the frame 2, so that the effect in stably closing the passage 310 may be achieved even in the battery module.

Meanwhile, the frame 2 may include two fixing rods 20. When the frame 2 includes two fixing rods 20, the connection members 430 disposed on both sides of the electrode lead 100 may be all connected to the fixing rods 20. In this case, the pressing member 400 may be more stably fixed to the frame 2.

In a battery module according to another embodiment of the present disclosure, the position to which the pressing member 400 is fixed (attached) may be different. In this regard, the battery module may further include busbar assemblies 3. The busbar assemblies 3 may be disposed at both ends of the cell stack 1 in the longitudinal direction thereof to block the openings of the frame 2, and may electrically connect the pouch cells 10 to each other. The pressing member 400 may be fixed to one of the busbar assemblies 3 disposed at both longitudinal ends of the cell stack 1. Various methods may be used to fix the pressing member 400 to the busbar assembly 3.

Meanwhile, the frame 2 of the battery module may include the pressing member 400. In this case, each pouch cell of the cell stack 1 may not include the pressing member. For example, in some processes of manufacturing the battery module, the cell stack 1 is disposed in the frame 2, and then, each pouch cell may be connected to the pressing member 400 of the frame 2.

When the frame 2 includes the pressing member 400, the pressing member 400 may be connected to each pouch cell after the cell stack 1 including the pouch cells lacking the pressing member 400 is accommodated in the frame 2. Thus, the pressing member 400 may be more stably connected to the pouch cell during the manufacturing of the battery module.

Similar to the frame 2, the busbar assemblies 3 may include the pressing member 400. In this case, the pressing member 400 may be connected to each pouch cell 10 when the busbar assemblies 3 are disposed after the cell stack 1 is disposed in the frame 2.

Referring to FIG. 7, the battery module may further include an end plate disposed on the side of the busbar assembly 3 opposite to the cell stack 1, and a top plate disposed on the top surface of the cell stack 1 to be combined with the frame 2.

While the embodiments of the present disclosure have been described using the drawings, the present disclosure is not limited by the embodiments. Various embodiments may be implemented by one of ordinary skill in the art to which the present disclosure belongs, within the scope equivalent to the technical idea of the present disclosure and the claims set forth below.

### [LIST OF REFERENCE NUMERALS]

1: cell stack
2: frame
3: busbar assembly
10: pouch cell
20: fixing rod
100: electrode lead
200: pouch
300: lead film
310: passage
400, 400': pressing member
410, 410': first member
411, 421: fixing member
412, 412', 422: protection member
420, 420': second member
430, 430': connection member
431: first connection unit
432: second connection unit
4301, 4311, 4321: elastic portion
4302, 4312, 4322: first extension portion
4303, 4313, 4323: second extension portion

## Claims

1. A pouch cell comprising:
an electrode lead electrically connected to an electrode assembly accommodated in a pouch to protrude outwardly from the pouch;
a lead film configured to cover a portion of the electrode lead to insulate the electrode lead from the pouch, and including a passage that forms a gas flow path when a pressure inside the pouch increases to a set pressure or higher; and
a presser disposed outside the pouch, and configured to press the passage to close the gas flow path of the passage.

2. The pouch cell according to claim 1, wherein the presser includes
a first presser disposed on an outer surface of the pouch positioned on one side relative to the electrode lead to press the passage in a direction toward the electrode lead, and
a second presser disposed on an outer surface of the pouch positioned on an opposite side relative to the electrode lead to press the passage in a direction toward the electrode lead.

3. The pouch cell according to claim 2, wherein the presser further includes
a connector connected to each of the first presser and the second presser, and configured to provide the first presser and the second presser with a force to press the passage.

4. The pouch cell according to claim 3, wherein the connector is connected to each of one end of the first presser and one end of the second presser.

5. The pouch cell according to claim 3, wherein the connector includes
a first connector connected to each of one end of the first presser and one end of the second presser, and
a second connector connected to each of an opposite end of the first presser and an opposite end of the second presser.

6. The pouch cell according to claim 3, wherein the connector includes
an elastic portion configured to provide an elastic resilience that enables the first presser and the second presser to press the passage,
a first extension configured to connect the first presser and the elastic portion, and
a second extension configured to connect the second presser and the elastic portion.

7. The pouch cell according to claim 6, wherein the elastic portion has a curved shape to generate the elastic resilience when the elastic portion is deformed, and
the first extension approaches the second extension as a distance from the elastic portion increases.

8. The pouch cell according to claim 6, wherein the elastic portion has a spring-like wound shape to generate the elastic resilience when the elastic portion is deformed.

9. The pouch cell according to claim 2, wherein each of the first presser and the second presser includes
a protector deformable to absorb impacts, and disposed in contact with the pouch, and
a fixer disposed opposite to the pouch relative to the protector, and configured to fix the protector.

10. The pouch cell according to claim 9, wherein the protector is formed of a rubber to be deformable, and disposed at a position corresponding to a position of the passage.

11. A pressing member, which is disposed outside a pouch of a pouch cell and presses a passage formed when a pressure in the pouch increases to a set pressure or higher, such that a gas flow path of the passage is closed when the pressure in the pouch decreases to a set pressure or lower, the pressing member comprising:
a first presser disposed in contact with the pouch, and configured to press the passage;
a second presser disposed on an opposite side to the first presser relative to the pouch to be in contact with the pouch, and configured to press the passage; and
a connector connected to each of the first presser and the second presser, and configured to provide the first presser and the second presser with a force to press the passage.

12. A battery module comprising:
a cell stack including a plurality of pouch cells; and
a frame configured to accommodate the cell stack,
wherein each of the pouch cells includes
an electrode lead electrically connected to an electrode assembly accommodated in a pouch to protrude outwardly from the pouch,
a lead film configured to cover a portion of the electrode lead to insulate the electrode lead from the pouch, and including a passage that forms a gas flow path when a pressure inside the pouch increases to a set pressure or higher, and
a pressing member disposed outside the pouch, and configured to press the passage to close the gas flow path of the passage.

13. The battery module according to claim 12, wherein the frame includes
a fixing rod disposed at one longitudinal end of the cell stack, and extending in a stacking direction of the pouch cells, and
wherein the pressing member is connected and fixed to the fixing rod.

14. The battery module according to claim 12, further comprising:
a busbar assembly disposed at one longitudinal end of the cell stack to block an opening of the frame, and configured to electrically connect the pouch cells to each other, and
wherein the pressing member is connected and fixed to the busbar assembly.

15. A pouch cell for a lithium secondary battery, comprising:
an electrode lead electrically connected to an electrode assembly accommodated in a pouch to protrude outwardly from the pouch;
a lead film configured to cover a portion of the electrode lead to insulate the electrode lead from the pouch, and including a passage that forms a gas flow path when a pressure inside the pouch increases to a set pressure or higher; and
a pressing member disposed outside the pouch, and configured to press the passage to close the gas flow path of the passage.

16. The pouch cell for a lithium secondary battery according to claim 15, wherein the pressing member is designed to close the gas flow path of the passage when the pressure inside the pouch decreases to a set pressure or lower.
